# EUROPEAN PATENT APPLICATION

(11) **EP 3 358 179 A1**
(43) Date of publication of application: **08.08.2018**
(21) Application number: 15911459.4
(22) Date of filing: 23.12.2015
(51) Int. Cl.: F03D 7/04, F03D 9/25, H02K 21/00

(54) **METHOD OF ADJUSTING WIND TURBINE POWER TAKE-OFF**

(71) Applicant: Obshchestvo S Ogranichennoj Otvetstvennostyu "VDM-Tekhnika", Moscow 127006 (RU)
(72) Inventor: MASOLOV, Vladimir Gennadevich, Moscow 115211 (RU); BEREZIN, Valerij Sergeevich, St.Petersburg 196608 (RU); LOGINOV, Anatolij Leonidovich, St.Petersburg 194214 (RU); POLETAEV, Ivan Georgievich, St.Petersburg 197349 (RU); MASOLOV, Andrej Gennadevich, Moscow 115551 (RU); FADEEV, Ivan Aleksandrovich, St.Petersburg 195256 (RU); KHUDONOGOV, Andrej Viktorovich, Moscow 117513 (RU)
(74) Representative: Chimini, Francesco
(86) International application number: PCT/RU2015/000918
(87) International publication number: WO 2017/111645

(57) **Abstract**

The invention relates to the field of wind power and can be used for creating and modifying wind energy installations such as to operate more efficiently in a wide range of wind conditions, including at low annual average wind speeds (3-6 m/s). A wind energy installation is controlled with the aid of an adjustable wind turbine power take-off system consisting of: a permanent magnet synchronous generator with a rotor position sensor; an active rectifier with a microprocessor controller; a power supply; a braking system; a ballast; and a down converter. An adjustment method for a wind energy installation of this type is proposed which increases the power coefficient across the entire range of working speeds and stabilizes the electromagnetic torque on the generator shaft when the wind speed is higher than a projected speed corresponding to a nominal power value. The adjustment method is based on controlling the rotation frequency of the wind turbine in accordance with a rotation frequency optimization algorithm which evaluates the change in energy generated across a set period of time and establishes a new rotation frequency value.

## Description

### The field of the invention

The invention relates to the field of wind power and can be used for creating and modifying wind energy installations such as to operate more efficiently.

### Cross-reference to related applications

The document US4525633 presents the method and apparatus for controlling the level of power transferred through a stand-alone wind power generating system. The key-point of the method is calculation of the output to the optimum ratio of rotation speed and wind speed with the usage of a velocity sensor and wind power conversion system. The disadvantage of this method is the need to apply a velocity sensor, which either is not accurate enough, or has a high cost and at the same time is an additional source of possible dysfunctions.

The document US4695736 presents the method for controlling and its implementing wind turbine structure. The method is based on torque control according to the schedule defining generator speed relative to the measured power generated, in order to increase efficiency of wind turbine. Thus, if the optimum speed lies below the actual speed, the frequency corresponding to the power will be lower than the actual one and a current reference (torque) will be generated in the direction of the reduction of the rotational speed. At an optimum frequency higher than the actual one, the power will correspond to a higher frequency of rotation, and the wind turbine will accelerate. The disadvantage of this method is the need to use a predefined graph, a priori different from the actual performance of the wind installation.

The closest to our claimed technical solution is the one from the document US8242620, which describes the structure of a wind turbine providing for the use of an active rectifier with the ability to control the rotational velocity within a predetermined range by generating a current task. This allows to stabilize the rotational velocity and to ensure the efficient operation of wind turbines at certain wind speeds corresponding to the speed of the wind turbine. The disadvantage of the prototype is the low efficiency of operation of the wind turbine in a wide range of wind speeds.

### Background and summary

The object of the present invention is to increase the efficiency of the operation of wind turbines in a wide range of wind speeds, including the low values of the average annual wind speeds (3-6 m/s).

The technical result of the claimed invention is in increasing the wind power conversion coefficient in the entire range of operating speeds of the wind turbine.

The technical result of the claimed invention is achieved due to the fact that the method of controlling the power take-off from the wind turbine, including the control over the speed of the wind turbine in the entire range of operating wind speeds, in accordance with the algorithm for finding the optimum speed, which estimates the change in the energy produced in a given time interval with a change in the rotational speed and sets a new value of the rotation speed on the basis of the values obtained, and at a wind speed higher than the calculated one, which ensures the stabilization of the electromagnetic torque on the shaft of the synchronous electric generator, while the speed control in the entire range of working wind speeds is performed by a power take-off (PTO) system consisting of a synchronous electric generator with permanent magnets with a rotor position sensor mounted on one shaft with the wind turbine; own power supply unit for electronic devices connected directly to the output of an electrical machine; active rectifier with vector control by the microprocessor programmable controller, providing the possibility of specifying the electromagnetic torque by forming sinusoidal in-phase with EMF currents of a given amplitude in the phase windings of the generator and converting them at the output of the active rectifier to the charging current of the DC link condenser with a voltage higher than the user specified output voltage, this stabilization of the voltage in a predetermined range of values is provided by a down converter under the control of the microprocessor controller, with full selection of the output power by the consumer, and in the event of impossibility of full power take-off by the consumer it is ensured by the combined operation of the down converter and the ballast under the control of the microprocessor controller; operating under the control of a microprocessor controller of a down converter that maintains the voltage in the DC link between the active rectifier and the down converter in a given range of values, as well as reducing the output voltage to the level required by the consumer and limiting the maximum current to protect against short circuit; ballast for the removal of excess electricity under the control of a microprocessor controller; the braking system associated with the windings of the synchronous electric generator, which, under the control of the microprocessor controller, produces a stepped braking of the synchronous electric generator or an emergency stop of the wind turbine.

In a particular case of the implementation of the claimed method of adjusting wind turbine power take-off, a ballast with PWM switching is provided, this allows smoothly adjusting the power removed by the B and reducing the condenser voltage to an acceptable level without interrupting the operation of the DC and transferring power to the consumer.

In a special case of implementing the claimed method for controlling the power take-off of a wind turbine, the synchronous electric generator (4) has a disk structure with permanent magnets with axial magnetization consisting of a rotor with two coaxial disks located on both sides of the stator and rigidly connected to each other, the volume of the toroidal stator, reduce the reaction of the armature and the path of the magnetic flux, thereby reducing the specific losses, as well as increasing the operational efficiency of the synchronous electric generator, simplify the docking with the wind turbine, while the usage of the slotless annular magnetic core of the stator makes reduction of the torque of static resistance of the synchronous electric generator and reduction of the torque of the winding of the wind turbine possible.

Usage of an adjustable wind turbine power take-off system consisting of a synchronous electric generator on permanent magnets with a rotor position sensor, an active rectifier with a microprocessor controller, a power supply unit, a braking system, a ballast and a down converter. For this structure, a control method is implemented, it ensures an increase of the wind power conversion coefficient over the entire operating speed range and stabilizes the electromagnetic torque on the generator shaft at a wind speed higher than the design value corresponding to the nominal value of the power. The control method is based on the control of the speed of the wind turbine in accordance with the optimal speed search algorithm, which estimates the change in the generated energy at a given time interval and sets a new value of the frequency of rotation.

### Brief Description of the Drawings

The details, features, and advantages of the present invention result from the following description of embodiments of the claimed method for controlling the power take-off of a wind turbine using the drawings where:
Fig. 1 - General structure of the wind turbine
Fig. 2 - Structure of the power take-off system

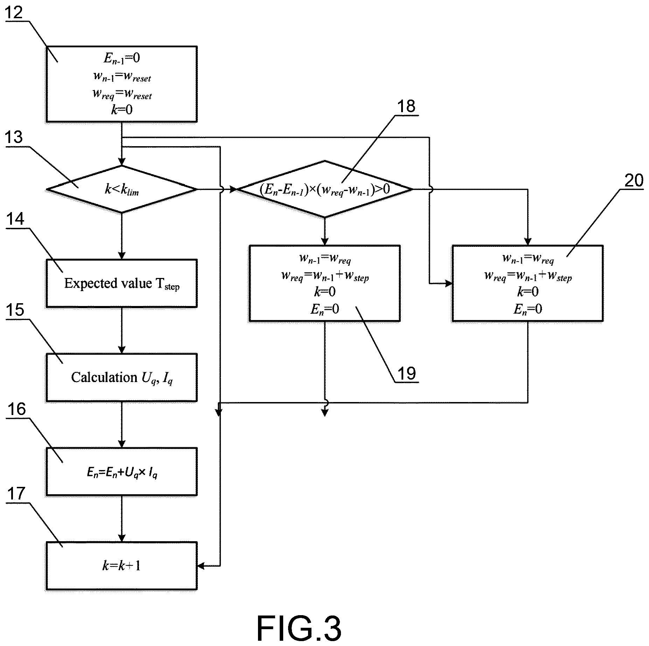

Fig. 3 - Algorithm for finding the optimum speed of the wind turbine
Fig. 4.1 - Functional diagram of the rotation frequency regulator
Fig. 4.2 - Functional diagram of active rectifier control

The reference numbers in the figures are the following:
*1* - *wind turbine; 2* - *power take-off system; 3* - *the consumer of generated electric power; 4* - *synchronous electric generator; 5* - *rotor position sensor; 6* - *power supply;* 7 - *microprocessor controller; 8* - *braking system; 9* - *active rectifier; 10* - *ballast; 11* - *down converter; positions 12-20 indicate blocks of the algorithm for the operation of the wind turbine power take-off control system; positions 21-23* - *blocks of the functional circuit of the speed controller; 24-30* - *blocks of the functional control circuit of the active rectifier.*

### Description

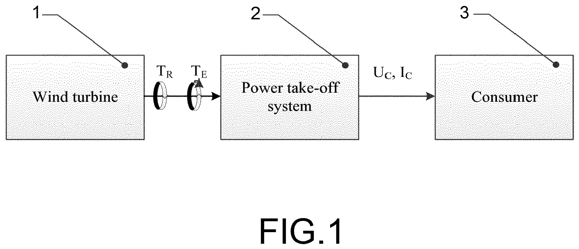

Figure 1 shows the general structure of a wind turbine comprising a wind turbine (1), attached to the PTO control system (2) transmitting to the consumer (3) generates electric power.

Wind turbine (1) generates torque T_{R} on the shaft in accordance with its characteristics and characteristics of the wind flow. The power take-off system of the wind turbine (2) generates an electromagnetic torque T_{E} on the shaft Converting the mechanical energy of the wind turbine (1) into electric energy required for the consumer (3) voltage Uc and the set current I_{C}. As a consumer (3), a battery of a specified voltage or a network inverter can be considered.

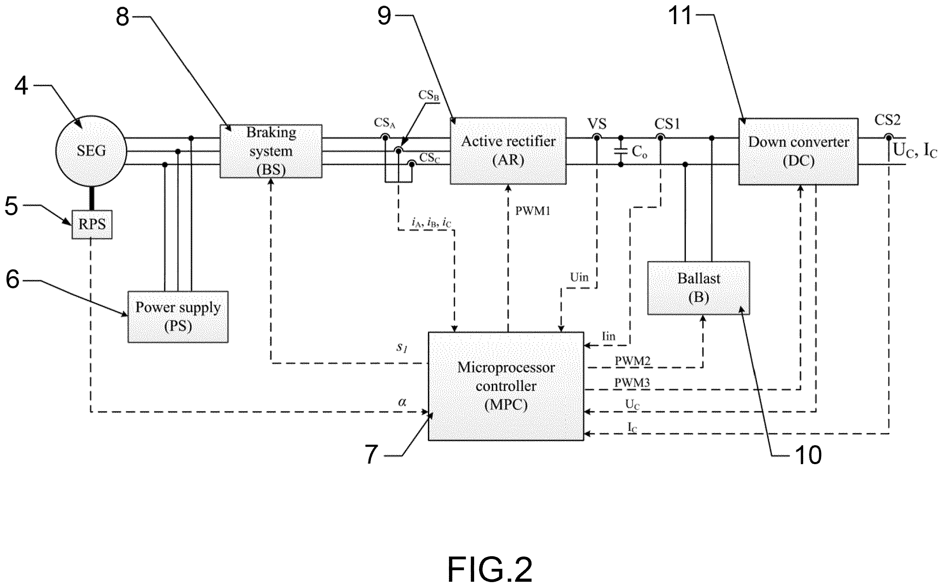

Figure 2 shows the structure of PTO system of the wind turbine (WT), consisting of a synchronous electrical generator (SEG) (4) from the rotor position sensor (RPS) (5) mounted on the same shaft with the WT, with the connected power supply (PS) (6) at the output of the SEG. The microprocessor controller (MPC) (7) controls the operation of the braking system (BS) connected to the windings of the SEG; the operation of the active rectifier (AR) (9) connected phase current sensors CS_{A}, CS_{B}, CSc at the input and connected voltage sensor VS at the output, the condenser Co, current sensor CS1 ; the operation of the ballast (B) (10) and the down converter (DC) (11) with the current sensor CS2 at the output.

PTO turbine system includes power, measuring and control devices whose primary purpose is to control the turbine speed in accordance with a search algorithm optimum rotational frequency, which estimates the change of energy output and produces the new reference speed value.

The solution of the problem of increasing the wind power conversion factor for a wide range of wind speeds is provided by the possibility:
- set the electromagnetic torque T_{E} on the shaft of the synchronous electric generator, proportional to the linear value of the current value of the synchronous electric generator, determined by the phase currents i_{A}, i_{B}, i_{C} formed by an active rectifier with vector control from a microprocessor-based programmable controller in accordance with the developed algorithms;
- set the currents i_{A}, i_{B}, i_{C} in the windings of the synchronous electric generator - currents in the sinusoidal form, coinciding in phase with the EMF generator, without additional harmonic components, thereby increasing the efficiency in the entire range of operating rotation frequencies;
- implement active rectifier boost converter function operating in conjunction with the down converter, providing a voltage value Uᵢₙ greater U_{C} and required values of U_{C} and I_{C}. Thus, it becomes possible to use a synchronous electric generator with a high efficiency value.

The microprocessor-based programmable controller realizes the vector control of the active rectifier by forming PWM1 pulse-width modulated (PWM) signals in accordance with the value of the angle α of rotation of the rotor of the synchronous electric generator. The value of rotor angle α is determined by the readings of the rotor position sensor.

The rotor position sensor is designed to implement the vector control of the active rectifier and to calculate the rotation speed of the generator's rotor. Precise determination of the position of the rotor with a small time lag in vector control with the rotor position sensor significantly improves the dynamic characteristics of the electric machine and provides complete controllability, which is necessary for the effective operation of the algorithms for regulating the operation of the wind turbine.

Feedback on the current loop is organized with the usage of the current sensors CS_{A}, CS_{B}, CS_{C}.

A power supply connected directly to the output of a synchronous electric generator provides low-voltage power to electronic devices.

Braking system produces a stepped stop synchronous electric generator by microprocessor programmable controller command when the voltage exceeds the threshold value Uᵢₙ or the wind turbine emergency stop in case of failure of one of the devices of the PTO system of the WT.

The down converter maintains the voltage of the DC link on the condenser Co between an active rectifier and the down converter in the predetermined range of values of Uᵢₙ according to the readings of the voltage sensor VS due to the current Iᵢₙ regulation according to the readings of the current sensor CS1 and the current I_{C} regulation according to the readings of the current sensor CS2 by the signals PWM3 and PWM2 of the microprocessor-based programmable controller. The down converter reduces the voltage to the desired level Uc and allows to limit the maximum value of current Ic, this ensures protection from the short circuit.

B with a capacity of at least the nominal power of the synchronous electrical generator, under the control of a programmable microprocessor controller diverts excess electric power in case of exceeding the predetermined value of Uᵢₙ.

The claimed method of the wind turbine power take-off provides an increase of the wind power conversion coefficient in the entire range of operating speeds of the wind turbine and stabilizes the electromagnetic torque on the generator shaft at a wind speed higher than the rated speed corresponding to the nominal value of the power. The control method is based on controlling the speed of the wind turbine in accordance with the optimum speed search algorithm, which estimates the change in the generated energy at a given time interval and sets a new value of speed.

The power take-off system implements three main operating modes:
1. Operating mode in the range of wind speed from minimum working to rated, at which the SEG generates the rated power.
   In the speed range from the minimum operating to nominal PWM signals PWM1 to AR with the MPC, switching of the SEG windings is performed. In this case, sinusoidal in-phase with EMF currents of a given amplitude are formed in the phases of the generator i_{A}, i_{B}, i_{C} Which ensures minimization of losses in the windings of the SEG and the formation of the optimum speed of rotation on the shaft of the SEG in accordance with the developed algorithm. Synphase and sinusoidal currents are provided by vector control according to the DPR readings. The active rectifier converts the EMF of the SEG and the variable phase currents i_{A}, i_{B}, i_{C} to the constant output current Iᵢₙ with the Uᵢₙ voltage on condenser C₀.
   At full power output the selection voltage stabilization user Uᵢₙ the condenser Co in a predetermined range of values is provided DC due to the current control I_{C} on indications CS2 modulated PWM signal PWM3 MPC.
   When the complete PTO for the consumer is impossible (Ic is limited by the consumer), the stabilization of the voltage Uᵢₙ on the condenser Co in a given range of values is ensured by the joint operation of the DC and B. Current control I_{C} of readings made CS2 modulated PWM signals PWM3 and PWM2 MPC connecting B.
2. Operating mode in the range of wind speed values that exceed the calculated value.
   If the value of the wind speed exceeds the calculated value of the wind speed of the wind turbine, the HP creates torque on the shaft T_{R} excess of the nominal value of the electromagnetic torque T_{E} of the synchronous electric generator. The frequency of rotation of the SEG becomes higher than the nominal one and the AR starts to work in the diode bridge mode. In this case, the amount of electric power supplied from the output of the AR exceeds the rated value and DC are not able to stabilize the voltage Uᵢₙ the condenser C₀. Upon reaching the condenser threshold voltage Uᵢₙ the MPC generated PWM signal PWM2, which connects the ballast and on indications DT1 multiple unit generates a current I_{π} at the output of AR than nominal creates an electromagnetic torque T_{E}. If the generated torque T_{E} exceeds M_{R} acting on the shaft of the SEG and WT, the speed is reduced and the wind turbine enters the operation mode 1.
   If the generated torque T_{E} is insufficient for braking SEG, SEG rotation speed increases, the EMF of the SEG increases and, according to the indications of the VS, the MPC transmits the signal s1 to the BS, after which the BS performs the stepwise braking of the SEG and WT. During the operation of the BS, formation of the AR currents and the charging of the condenser Co, the DC continues to generate power, which leads to decrease of the voltage Uᵢ on the VS below the set value. After the BS triggering, the windings of the synchronous generator remain short-circuited until the voltage drops below the set value, after which the wind turbine goes into operation mode 2 with a ballast.
3. Emergency operation of wind turbines in case of failure of one of the devices PTO system of the WT. In this case, the BS stops the wind turbine.

3 shows the algorithm of searching the optimum frequency of turbine's rotation. The algorithm is based on the search for the optimum speed of rotation based on the average value of the generated energy for a given time interval. The block (12) specifies the initial parameters: *Eₙ* - the total "energy" obtained at the last iteration of the cycle, *w*_{*n*-1} - the specified speed at the last iteration of the cycle, *w_{req}* - the specified rotational speed at this iteration of the cycle, *k* - the number of cycle passes. The block (13) compares the number of passes with a given limit value. The block (14) specifies the time delay for the cycle. Block (15) gives the values of q components for voltage *Uq* and current *Iq.* The block (16) adds to the value of the total "energy" *Eₙ* value at this iteration of the loop. The concept of "energy" in this case is applied with a reservation, since instantaneous power values are summed up for amplitude values of current and voltage of one phase and the total value is not equal to the actual generated energy of the generator, but always proportional to it with the same coefficient. Thus, the obtained values of "energy" can be correctly compared with each other, which are used in this algorithm. The block (17) increases the pass counter and when the limit value is reached, the block (18) is executed, comparing the product of the change in "energy" and the rotation frequency between the past and the current iteration with zero. A value greater than zero means that the speed has been increased and the value of "energy" has been increased or the speed has decreased and the value of "energy" has also decreased, that is why, it is required to increase the speed that is performed by the unit (19). A value less than zero means that the rotation speed has decreased and the energy value has been increased or the rotation speed has been increased and the energy value has decreased, therefore, it is required to reduce the speed of the wind turbine that the unit (20) performs.

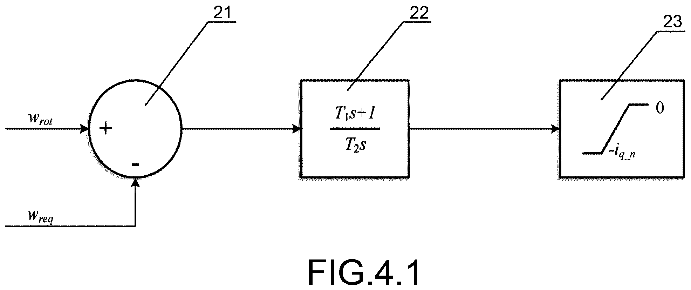

Fig. 4.1 shows the functional diagram of the speed controller. The vector control scheme is implemented. The adder (21) calculates the difference between the set speed value w_{req} and the actual wᵣₒₜ, the difference value is fed to the PI regulator (22). The unit (23) provides the limitation of setting the current I_{q_req} in the range from zero to the nominal value of the electric machine in order to avoid its transfer to the motor mode and not to exceed the permissible current value.

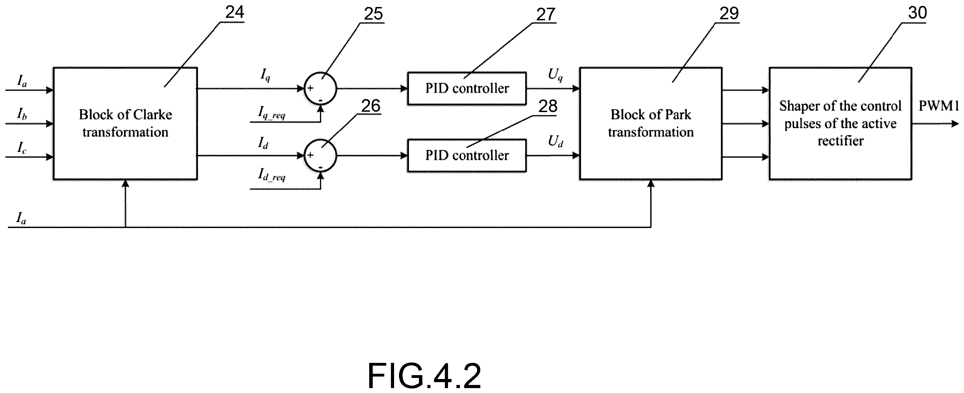

Fig. 4.2 shows the functional diagram of the active rectifier control. The values of the measured phase currents are fed to the block (24) that implements the Park-Clarke transformation. The resulting values of the d-q components arrive at blocks (25) and (26) in which the given values are subtracted from the actual values and converted by the PID regulators (27), (28). In the block (29), the reference values for each phase are restored and based on them in the block (30) control pulses are fed to the active rectifier.

## Claims

1. A method of adjusting wind turbine power take-off, based on controlling the speed of a wind turbine in accordance with an optimum speed search algorithm that estimates the change in the output energy for a given time interval as the rotational speed changes and sets a new speed value based on the values obtained; at the wind speed above the calculated, which corresponds to the nominal value of power, it ensures the stabilization of the electromagnetic torque on the synchronous winding shaft, at the same time the control of the speed of rotation in the entire range of working wind speeds is carried out by a power take-off system consisting of a synchronous generator with permanent magnets with a rotor position sensor mounted on a single shaft with a wind turbine; own power supply unit for electronic devices connected directly to the output of an electrical machine; active rectifier with vector control by the microprocessor programmable controller, providing the possibility of specifying the electromagnetic torque by forming sinusoidal in-phase with EMF currents of a given amplitude in the phase windings of the generator and converting them at the output of the active rectifier to the charging current of the DC link condenser with a voltage higher than the user specified output voltage, this stabilization of the voltage in a predetermined range of values is provided by a down converter m under control of the microprocessor controller at full power output selection by the consumer, and the impossibility of full power take-off consumer is provided with teamwork down converter and ballast under control of the microprocessor; running the microprocessor down converter supporting voltage DC link between the active rectifier and down converter within a predetermined range of values, as well as lowering the output voltage to the desired level of consumer and limiting the maximum current value for the short circuit protection; ballast for the removal of excess electricity under the control of a microprocessor controller; the braking system associated with the windings of the synchronous electric generator, which, under the control of the microprocessor controller, produces a stepped braking of the synchronous electric generator or an emergency stop of the wind turbine.

2. The method according to claim 1 wherein the system further comprises a ballast with pulse-width modulated switching.

3. The method according to claim 1 wherein the synchronous power generator (4) is a disk structure with permanent magnets with axial magnetization, the rotor consisting of two coaxial discs arranged on both sides of the stator and rigidly interconnected.
